# EUROPÄISCHE PATENTANMELDUNG

(11) **EP 4 163 054 A1**
(43) Veröffentlichungstag der Anmeldung: **12.04.2023**
(21) Anmeldenummer: 21201453.4
(22) Anmeldetag: 07.10.2021
(51) Int. Cl.: B23Q 17/09, B23Q 17/22, G05B 19/00, A61C 1/00

(54) **DENTALFRÄSMASCHINE ZUM HERSTELLEN EINES DENTALOBJEKTS**

(71) Anmelder: Ivoclar Vivadent AG, 9494 Schaan (LI)
(72) Erfinder: TOMMASINI, Dario, 7205 Zizers (CH); REiNHARDT, Jonas, 7206 Igis (CH); ROHNER, Göpf, 9450 Altstätten (CH); HUBER, Martin, 5452 Pfarrwerfen (AT)
(74) Vertreter: Baldus, Oliver

(57) **Zusammenfassung**

Die vorliegende Erfindung betrifft eine Dentalfräsmaschine (100) zum Herstellen eines Dentalobjekts (101), mit einem Mikrofon (103) zum Erfassen von Schallsignalen während eines Fräsvorgangs; und einer Positionsbestimmungseinrichtung (105) zum Bestimmen einer Position eines Fräswerkzeugs (107) und/oder eines Werkstückes (111) auf Basis der Schallsignale.

## Beschreibung

Die vorliegende Erfindung betrifft eine Dentalfräsmaschine zum Herstellen eines Dentalobjekts und ein Dentalfräsverfahren zum Herstellen eines Dentalobjekts.

In Dentalfräsmaschinen ist gegenwärtig keine Möglichkeit vorhanden, um die Genauigkeit der gefertigten Indikationen oder Positionen der Halter und Rohteile automatisch zu vermessen. Zu diesem Zweck wird ein Referenzkörper gefräst, der anschließend vom Kunden mittels Bügelmessschraube (Mikrometer) vermessen wird. Dieses Ergebnis wird in der Maschinensteuerung händisch verrechnet und der Nullpunkt der Maschine korrigiert. Ein Benutzer kann daher lediglich durch das Fräsen und Vermessen eines Prüfkörpers die Dentalfräsmaschine kalibrieren oder überprüfen. Bei diesem Verfahren wird die Summe aller Fehler und die Fehler des Messwerkzeugs (Messung) erfasst. Daneben werden diverse Messmittel (3D Taster, Laser, IBS, Messkopf) verwendet, um die mechanische Ausrichtung zu vermessen und zu korrigieren.

Dadurch entstehen zusätzliche Kosten und Platzbedarf. Die Positionsbestimmung ist empfindlich gegen externe Einflüsse, wie beispielsweise das Vorhandensein von Kühlwasser und es entsteht ein Arbeitsaufwand zur Überprüfung und Genauigkeit der externen Prüfmittel. Daneben entstehen Messfehler, wenn die Messung nicht fest in der Dentalfräsmaschine integriert ist. Diese entstehen, weil ein zusätzliches Werkzeug, wie beispielsweise ein Messtaster, eingespannt wird. Eine Kalibrierung von Fräswerkzeug zu Werkstück wird für jede neue Kombination von Fräswerkzeug zu Werkstück wegen der Produktionstoleranzen des Werkstücks erneut durchgeführt.

Es ist die technische Aufgabe der vorliegenden Erfindung, eine genaue Positionserfassung eines Fräswerkzeugs gegenüber dem eingespannten zu fräsenden Werkstück innerhalb einer Dentalfräsmaschine zu ermöglichen.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch eine Dentalfräsmaschine zum Herstellen eines Dentalobjekts gelöst, mit einem Mikrofon zum Erfassen von Schallsignalen während eines Fräsvorgangs; und einer elektronischen Positionsbestimmungseinrichtung zum Bestimmen einer Position eines Fräswerkzeugs und/oder eines Werkstückes auf Basis der Schallsignale. Sind die Position, Länge und/oder Abmessungen des Fräswerkzeugs bekannt, kann die Position des Werkstückes auf Basis der Schallsignale bestimmt werden. Die Position des Werkstückes kann im Koordinatensystem des Fräswerkzeugs bestimmt werden.

Ist die Position und/oder die Abmessungen des Werkstückes bekannt, kann die Position des Fräswerkzeugs auf Basis der Schallsignale bestimmt werden. Die Position des Fräswerkzeuges kann im Koordinatensystem des Werkstücks bestimmt werden.

Dadurch wird beispielsweise der technische Vorteil erreicht, dass mit geringem Aufwand eine Position des Fräswerkzeugs bestimmt werden kann. Die Schallsignale können auch für eine adaptive Kontrolle, eine Prozessüberwachung oder Prozesskontrolle während dem Fräsprozess verwendet werden. Das Mikrofon dient als Messmittel zum Ermitteln der Position des Fräswerkzeugs.

In einer technisch vorteilhaften Ausführungsform der Dentalfräsmaschine ist das Mikrofon in einem Fräskopf der Dentalfräsmaschine angeordnet. Dadurch wird beispielsweise der technische Vorteil erreicht, dass die Schallsignale beim Bearbeiten des Werkstücks gut erfasst werden können.

In einer weiteren technisch vorteilhaften Ausführungsform der Dentalfräsmaschine ist Positionsbestimmungseinrichtung ausgebildet, das Schallsignal in die Frequenzdomäne zu transformieren. Zunächst wird das Schallsignal vom Mikrofon in der Zeitdomäne erfasst und anschließend mittels einer Fouriertransformation in die Frequenzdomäne transformiert. Dadurch wird beispielsweise der technische Vorteil erreicht, dass sich das während der Bearbeitung erzeugte Schallsignal gut von anderen Schallsignalen trennen lässt.

In einer weiteren technisch vorteilhaften Ausführungsform der Dentalfräsmaschine umfasst die Dentalfräsmaschine mehrere Mikrofone zum Erfassen von Schallsignalen während eines Fräsvorgangs. Dadurch wird beispielsweise der technische Vorteil erreicht, dass sich die Position des Fräswerkzeugs genauer bestimmen lässt.

In einer weiteren technisch vorteilhaften Ausführungsform der Dentalfräsmaschine ist das Mikrofon ausgebildet, Schallsignale mit einer Frequenz zwischen 5 kHz und 20 kHz zu erfassen. Dadurch wird beispielsweise der technische Vorteil erreicht, dass besonders geeignete Frequenzbereiche zur Erfassung der Schallsignale verwendet werden und Störeinflüsse vermindert werden.

In einer weiteren technisch vorteilhaften Ausführungsform der Dentalfräsmaschine ist die Positionsbestimmungseinrichtung ausgebildet, eine Phasenverschiebung zwischen einem ersten und einem zweiten Schallsignal zu bestimmen. Dadurch wird beispielsweise der technische Vorteil erreicht, dass sich die Position des Fräswerkzeugs präzise bestimmen lässt.

In einer weiteren technisch vorteilhaften Ausführungsform der Dentalfräsmaschine ist die Positionsbestimmungseinrichtung ausgebildet, einen Berührungskontakt des Fräswerkzeugs an dem Werkstück zu erfassen. Dadurch wird beispielsweise der technische Vorteil erreicht, dass eine relative Beziehung zwischen Fräswerkzeug und Werkstück hergestellt werden kann.

In einer weiteren technisch vorteilhaften Ausführungsform der Dentalfräsmaschine ist die Positionsbestimmungseinrichtung ausgebildet, eine räumliche Form eines Werkstücks zu erfassen. Dadurch wird beispielsweise der technische Vorteil erreicht, dass sich die Abmessungen und die Geometrie des Werkstücks auf einfache Weise bestimmen lassen.

In einer weiteren technisch vorteilhaften Ausführungsform der Dentalfräsmaschine wird der Fräsvorgang auf Basis der Schallsignale gesteuert. Dadurch wird beispielsweise der technische Vorteil erreicht, dass sich eine Überhitzung oder ein Steckenbleiben des Fräswerkzeugs verhindern lässt.

Gemäß einem zweiten Aspekt wird die technische Aufgabe durch ein Dentalfräsverfahren zum Herstellen eines Dentalobjekts gelöst, mit den Schritten eines Erfassens von Schallsignalen während eines Fräsvorgangs mit einem Mikrofon; und eines Bestimmens einer Position eines Fräswerkzeugs und/oder eines Werkstückes auf Basis der Schallsignale. Dadurch werden die gleichen technischen Vorteile wie durch die Dentalfräsmaschine nach dem ersten Aspekt erreicht.

In einer technisch vorteilhaften Ausführungsform des Dentalfräsverfahrens wird das Schallsignal in die Frequenzdomäne transformiert. Dadurch wird beispielsweise ebenfalls der technische Vorteil erreicht, dass sich das während der Bearbeitung erzeugte Schallsignal gut von anderen Schallsignalen trennen lässt.

In einer weiteren technisch vorteilhaften Ausführungsform des Dentalfräsverfahrens werden die Schallsignale mit einer Frequenz zwischen 5 kHz und 20 kHz erfasst. Dadurch wird beispielsweise ebenfalls der technische Vorteil erreicht, dass besonders geeignete Frequenzbereiche zur Erfassung der Schallsignale verwendet werden.

In einer weiteren technisch vorteilhaften Ausführungsform des Dentalfräsverfahrens wird eine Phasenverschiebung zwischen einem ersten und einem zweiten Schallsignal bestimmt. Das erste Schallsignal kann von einem ersten Mikrofon erfasst worden sein und das zweite Schallsignal kann von einem zweiten Mikrofon erfasst worden sein. Dadurch wird beispielsweise ebenfalls der technische Vorteil erreicht, dass die Position des Fräswerkzeugs genauer erfasst werden kann.

In einer weiteren technisch vorteilhaften Ausführungsform des Dentalfräsverfahrens wird ein Berührungskontakt des Fräswerkzeugs an dem Werkstück erfasst. Das Fräswerkzeug ist hierbei in einem Bearbeitungsbetrieb. Dadurch wird beispielsweise ebenfalls der technische Vorteil erreicht, dass eine Bearbeitung des Werkstücks genauer durchgeführt werden kann.

In einer weiteren technisch vorteilhaften Ausführungsform des Dentalfräsverfahrens wird die räumliche Form eines Werkstücks erfasst. Dadurch wird beispielsweise ebenfalls der technische Vorteil erreicht, dass sich die Abmessungen und die Geometrie des Werkstücks auf einfache Weise bestimmen lassen.

Ausführungsbeispiele der Erfindung sind in den Zeichnungen dargestellt und werden im Folgenden näher beschrieben.

Es zeigen:
- Fig. 1: eine perspektivische Ansicht eines Fräskopfes;
- Fig. 2: eine schematische Ansicht einer Dentalfräsmaschine mit einer Positionsbestimmungseinrichtung;
- Fig. 3: Schallsignale bei unterschiedlichen Zuständen der Dentalfräsmaschine;
- Fig. 4: ein Mikrofon mit aufgezeichneten Schallsignalen; und
- Fig. 5: ein Blockdiagramm eines Dentalfräsverfahrens zum Herstellen eines Dentalobjekts.

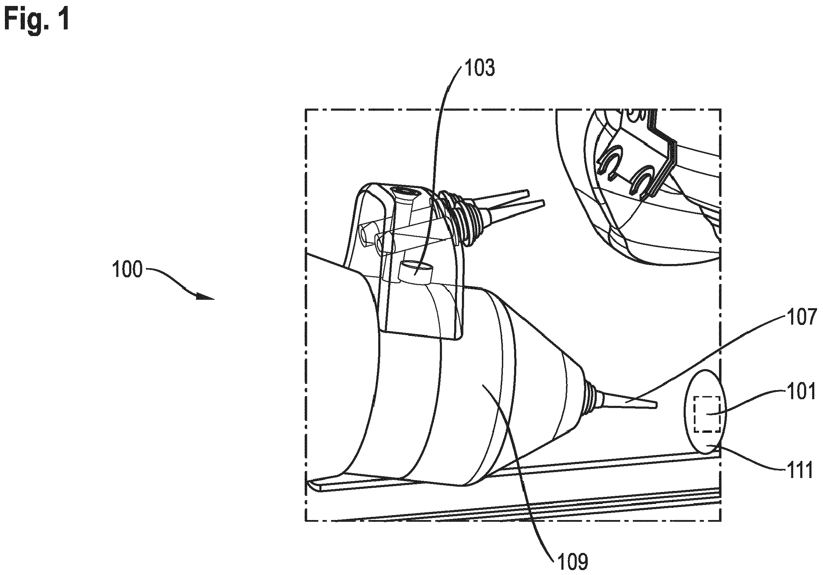

Fig. 1 zeigt eine perspektivische Ansicht eines Fräskopfes 109 einer Dentalfräsmaschine 100. Die Dentalmaschine 100 dient zum Herstellen eines Dentalobjekts 101 mittels eines Fräsverfahrens.

Das Dentalobjekt 101 ist beispielsweise eine Krone, ein Abutment, eine Brücke, ein Veneer, ein Inlay, ein Onlay, oder ein Topping. Die Dentalfräsmaschine 100 fräst das Dentalobjekt 101 aus einem Werkstück mittels einem beweglichen Fräswerkzeug 107 heraus. Das Fräswerkzeug 107 zerspant oder schleift dabei das Werkstück 111, bis die gewünschte Form des Dentalobjekts 101 erreicht ist. Das Werkstück 111 ist beispielsweise durch eine Keramik, eine Glaskeramik, ein Kompositmaterial oder ein Metall in Form eines Rohlings gebildet. Der Rohling kann die Form eines Blocks, eines Quaders, oder einer Scheibe aufweisen.

Um das Fräswerkzeug 107 gegenüber dem Werkstück 111 zu positionieren, wird ein Mikrofon 103 als Sensor in der Dentalfräsmaschine 100 benutzt, um die Berührung des Werkstückes 111 mit dem Fräswerkzeug 107 zu detektieren. Durch die Schallsignale, die von dem Mikrofon 103 erfasst werden, kann ermittelt werden, ob sich das drehende Fräswerkzeug 107 oder der drehende Rohling in Kontakt mit dem Werkstück befindet. Hierdurch wird eine genaue Positionsbestimmung mit platzsparendem und geringem technischem Aufwand ermöglicht. Die Dentalfräsmaschine kann daher ohne händisches Eingreifen einen Bezug der Maschinengenauigkeit zur Messung des Dentalobjekts 101 machen.

Das Mikrofon 103 ist beispielsweise ein reguläres Schallmikrofon und ausgebildet, Schall mit Frequenzen zwischen 5 kHz und 20 kHz zu erfassen.

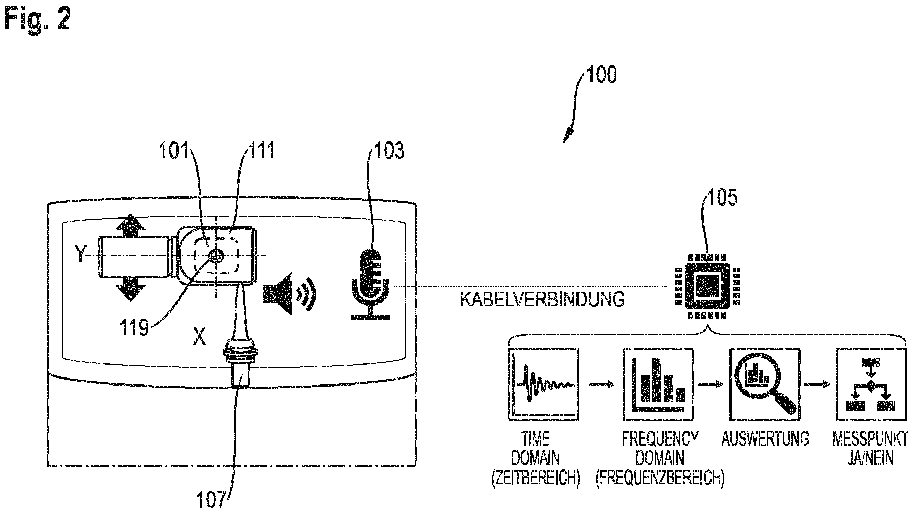

Fig. 2 zeigt eine schematische Ansicht einer Dentalfräsmaschine 100 mit einer Positionsbestimmungseinrichtung 105. In der Dentalfräsmaschine 100 ist das Werkstück 111 mit einem Loch 119 eingespannt. Aus dem Werkstück 111 wird das Dentalobjekt 101 herausgefräst.

Die Positionsbestimmungseinrichtung 105 umfasst beispielsweise einen Prozessor und einen digitalen Speicher, in dem Programme und Daten abgelegt werden können, wie beispielsweise einen RAM-Speicher. Die erfassten Schallsignale können in den digitalen Speicher als Daten abgelegt werden und durch den Prozessor verarbeitet werden.

Die elektronische Positionsbestimmungseinrichtung 105 erfasst die Schallsignale, die von dem Mikrofon 103 aufgezeichnet werden als digitale Werte. Die Positionsbestimmungseinrichtung 105 greift auch auf die Maschinensteuerung zu und kann die XYZ-Daten mit dem Schallsignal abgleichen. Somit erhält man auf eine zweite Art die relative genaue Position von dem Werkstück 111 zu dem Fräswerkzeug 107 oder umgekehrt.

Dadurch lässt sich der Schall über den Verlauf der Zeit aufzeichnen. Die digitalen Werte lassen sich in dem elektronischen Speicher (RAM-Speicher) der Positionsbestimmungseinrichtung 105 ablegen. Die Positionsbestimmungseinrichtung 105 ist in der Lage, die erfassten Schallsignale auszuwerten und hieraus eine Bestimmung einer Position des Fräswerkzeuges zu errechnen. Vorteilhaft ist es, wenn der Messpunkt nicht weiter entfernt als die durchschnittliche Werkzeuglänge ist.

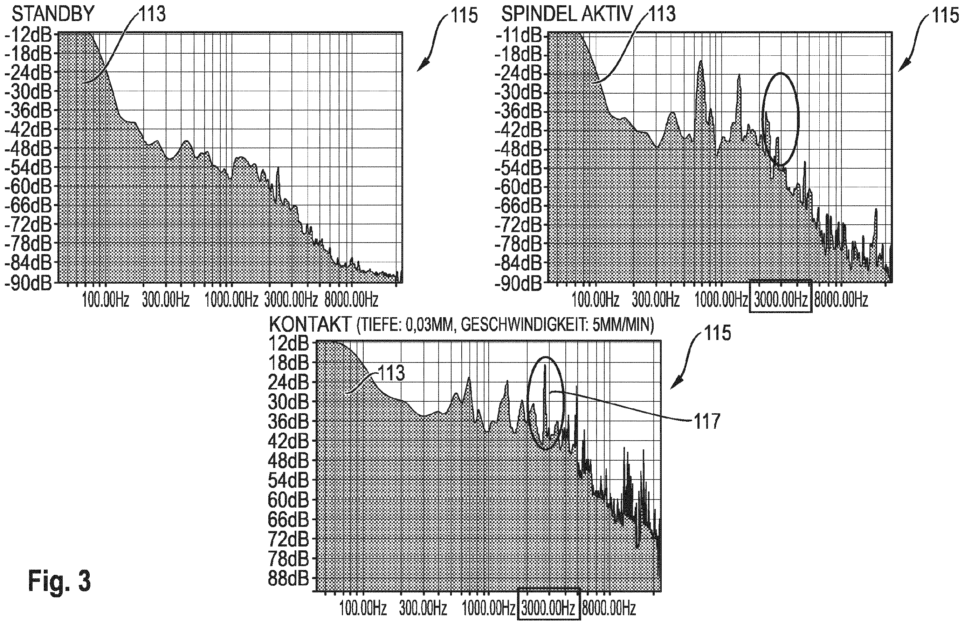

Fig. 3 zeigt Schallsignale bei unterschiedlichen Zuständen der Dentalfräsmaschine 100. Die Position des Fräswerkzeugs 107 kann beispielsweise mittels der Schallsignale bei einer Berührung des Fräswerkzeugs 107 mit dem Werkstück 107 erfasst werden. Das drehende Fräswerkzeug 107 erzeugt bei der Berührung mit dem Werkstück 111 ein charakteristisches Geräusch. Aus diesem charakteristischen Geräusch kann der Kontakt des Fräswerkzeugs 107 mit dem Werkstück erkannt werden. Hierzu wird eine Datenanalyse des Schallsignale 113 durchgeführt. Zudem kann der Fräsvorgang auf Basis der Schallsignale gesteuert werden.

Zunächst werden die Schallsignale 113 von der Positionsbestimmungseinrichtung 105 erfasst, wenn das Fräswerkzeug 107 in Betrieb ist, jedoch nicht in mechanischem Kontakt mit dem Werkstück 111 steht. Diese Schallsignale 113 werden mittels einer Fourier-Transformation, wie z.B. einem FFT-Algorithmus (FFT - Fast Fourier Transformation) in die Frequenzdomäne transformiert. Dadurch ergibt sich ein Frequenzspektrum 115 für den Zustand, dass sich das drehende Fräswerkzeug 107 nicht in Kontakt mit dem Werkstück 111 befindet. Dieses Verfahren wird kontinuierlich wiederholt, so dass laufend Frequenzspektren 115 erhalten werden.

Wird der Vortrieb oder Vorschub der Dentalfräsmaschine 100 aktiviert, bewegt sich das Fräswerkzeug 107 in Richtung des Werkstücks 111. Sobald das Fräswerkzeug 107 das Werkstück 111 berührt, verändern sich die Schallsignale 113, da ein Bohrgeräusch bei der Berührung des Werkstücks entsteht.

Im Frequenzspektrum 115 tritt in diesem Fall eine Spitze (Peak) 117 auf, die durch das Bohrgeräusch entsteht. Die Spitze 117 kann leicht erfasst werden, wenn zeitlich aufeinander erfasste Frequenzspektren 115 voneinander subtrahiert werden. Sind die Länge des Fräswerkzeuges 107 und die Abmessungen des Werkstücks 111 bekannt, kann die Position des Fräswerkzeuges 107 im Referenzkoordinatensystem der Werkstückeinspannung bestimmt werden. Sobald die Spitze 117 im Frequenzspektrum 115 erfasst wird, wird die Koordinate von der Positionsbestimmungseinrichtung 105 als Kontaktpunkt abgespeichert. Dabei kann es sich um die Koordinate im Koordinatensystem des Fräswerkzeuges 107 oder die Koordinate im Koordinatensystem des Werkstücks 111 handeln. Auf diese Weise lässt sich durch den Kontaktpunkt die relative Position von Fräswerkzeug 107 und Werkstück 111 ermitteln. Durch das Antasten mit Schall können Position und Lage des eingespannten Werkstückes 111 und/oder Fräswerkzeuges 107 ermittelt werden.

Die Position der Spitze 117 im Frequenzspektrum 115 hängt unter anderem von der Drehzahl des Fräswerkzeuges ab. Bei höheren Drehzahlen verschiebt sich die Spitze 117 zu höheren Frequenzen. Bei niedrigeren Drehzahlen verschiebt sich die sich die Spitze 117 zu niedrigeren Frequenzen.

Die Position des Fräswerkzeugs 107 kann jedoch auch auf andere Weise bestimmt werden. Während dem Betrieb des Fräswerkzeuges 107 werden Betriebsgeräusche erzeugt. Die Betriebsgeräusche werden kontinuierlich von mehreren Mikrofonen 103 der Dentalfräsmaschine 100 erfasst, die jeweils an unterschiedlichen Positionen angeordnet sind. Hierzu können drei oder vier Mikrofone 103 verwendet werden. Aus den unterschiedlichen Laufzeiten und Phasenverschiebungen der Betriebsgeräusche zu den jeweiligen Mikrofonen 103 kann die Positionsbestimmungseinrichtung 105 die Position des Fräswerkzeuges 107 im Raum berechnen, wie beispielsweise mit einem akustischen Triangulationsverfahren. Eines der Mikrofon 103 kann nahe an der Schalquelle angeordnet sein, während die übrigen Mikrofone 103 an unterschiedlichen Positionen innerhalb Dentalfräsmaschine 100 angeordnet sind.

In allen Verfahren können Störgeräusche in den Schallsignalen 113 mittels geeigneter digitaler oder elektronischer Filter aus den Schallsignalen entfernt werden, wie beispielsweise in einem Bereich von 2.5 kHz bis 17 kHz. Durch ein Frequenzfilter lassen sich beispielsweise bestimmte Frequenzen einer Geräuschkulisse beseitigen, die von benachbarten Geräten stammen.

Die beiden Verfahren können auch zeitgleich in Kombination verwendet werden. Durch die Verfahren erfolgt eine permanente Signalüberwachung der Schallsignale, beispielsweise in Echtzeit. Dadurch kann die Position im Bereich von wenigen Millisekunden erfasst werden

Wird das Fräswerkzeug 107 bei der Positionserfassung beispielsweise mit einem Vorschub von 5 mm/min verfahren, ergibt sich bei einer Reaktionszeit von 10 ms eine Genauigkeit der Positionserfassung von 0.8 µm. Bei einer Reaktionszeit von 70 ms ergibt sich eine Genauigkeit der Positionserfassung von 6 µm.

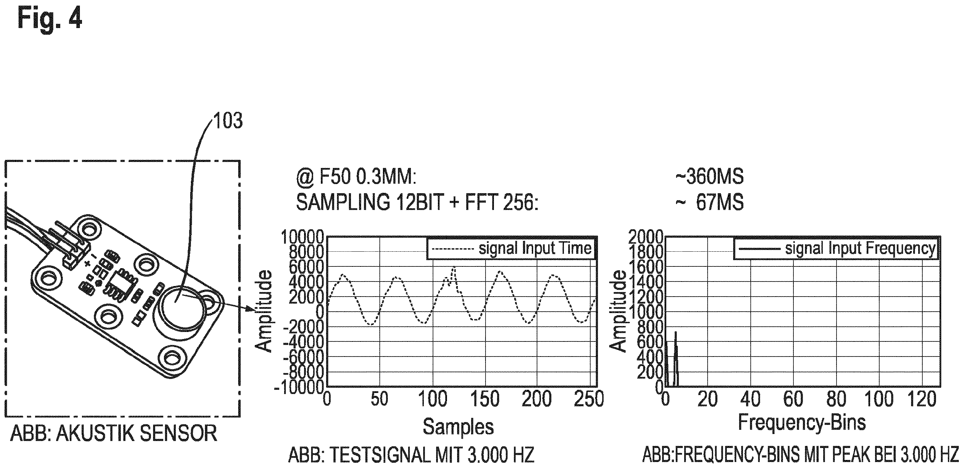

Fig. 4 zeigt ein Mikrofon 103 mit aufgezeichneten Schallsignalen. Als Mikrofon 103 kann ein reguläres Mikrofon zum Erfassen von Schallsignalen in einem Bereich zwischen 100 Hz und 20 KHz verwendet werden. Das Mikrofon 103 kann auf einer Drehspindel oder einem Blockhalter der Dentalfräsmaschine 100 angeordnet sein, um einen Berührungskontakt des Fräswerkzeuges 107 zu erfassen.

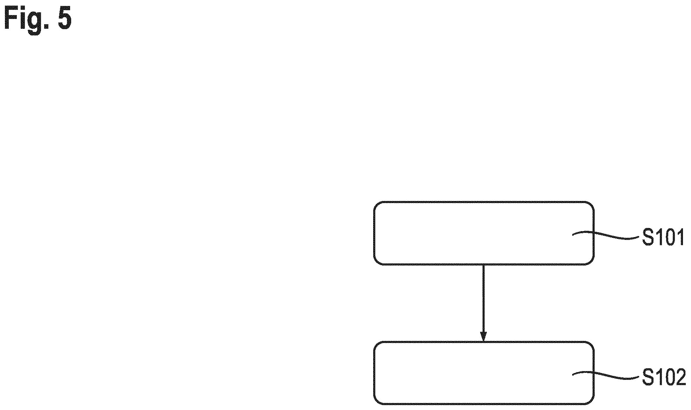

Fig. 5 zeigt ein Blockdiagramm eines Dentalfräsverfahrens zum Herstellen eines Dentalobjekts 101. Das Dentalfräsverfahren umfasst den Schritt S101 eines Erfassens von Schallsignalen während eines Fräsvorgangs mit dem Mikrofon 103 und den Schritt S102 eines Bestimmens S102 einer Position eines Fräswerkzeugs 107 auf Basis der Schallsignale.

Durch das Verfahren kann ein Vermessen einer beliebigen gefrästen Form des Werkstücks 111 während dem Fräsprozess und unmittelbar vor oder nach der Bearbeitung erfolgen, solange das gefräste Werkstück 111 noch in der Dentalfräsmaschine 100 eingespannt ist.

Das Vermessen kann beispielsweise für das Ausrichten eines Werkstücks 111 verwendet werden, das an einer vorgegebenen Position ein Loch 119 aufweist. Beim Fräsen des Werkstücks 111 mit dem Loch 119 kann die Position des Lochs 119 zum Fräswerkzeug 107 auf Mikrometer genau ermittelt werden. Dabei wird zunächst ein Werkstück 111 mit bekannten Abmessungen in die Dentalfräsmaschine 100 eingespannt.

Anschließend wird das Fräswerkzeug 107 von unterschiedlichen Seiten her an das Werkstück 111 herangefahren und die Position eines Kontaktes des Fräswerkzeuges 107 mit dem Werkstück 111 bestimmt. Bei einem quaderförmigen Block als Werkstück 111 wird beispielsweise die Position eines Kontaktes des Fräswerkzeugs 107 an vier unterschiedlichen Seiten bestimmt wie oben, unten, rechts und links.

Aus diesen Positionen lassen sich die Koordinaten des Kontaktpunktes ermitteln, wie beispielsweise X-, Y- und Z-Koordinaten. Aus diesen Koordinaten lassen sich durch Differenzbildung die Abmessungen des Werkstücks 111 und die Position des Achssystems zum Werkstück 111 bestimmen. Das Material des Werkstücks 111 bleibt bei der Positionserfassung an der Seite weitestgehend unversehrt. Ist die Position des Loches 119 im Werkstück bekannt, kann auch diese Position aus den ermittelten Koordinaten der Kontaktpunkte berechnet werden.

Ist die Position des Fräswerkzeugs 107 bekannt, können die Position und/oder die Abmessungen des Werkstückes 111 auf Basis der Schallsignale bestimmt werden. Ist umgekehrt die Position und/oder die Abmessungen des Werkstückes 111 bekannt, kann die Position des Fräswerkzeugs 107 auf Basis der Schallsignale bestimmt werden.

Ist die Position eines Loches 119 oder einer Aussparung in Bezug zu den Seiten bekannt, kann diese aus den zuvor bestimmten Positionen der Seiten berechnet werden. In diesem Fall wird der technische Vorteil erreicht, dass eine Toleranz des Spannsystems und des Werkstückes kompensiert werden kann und das Fräswerkzeug 107 das Werkstück so bearbeiten kann, dass exakt um das Loch 119 herumgefräst wird.

Durch ein oder mehrere Mikrofone 103 in der Dentalfräsmaschine 100 kann zudem erfasst werden, wenn der Block mit dem Fräswerkzeug 107 in Kontakt kommt. In diesem Fall ertönt ein charakteristisches Geräusch, das mit dem Mikrofon 103 gemessen werden. Dieses Geräusch kann von mehreren Seiten aufgenommen werden, so dass die Position vom Block zum Werkstück 111 vermessen werden kann.

Das Dentalfräsverfahren kann mit geringem technischem Aufwand realisiert werden und ist durch die nachträgliche Installation von Mikrofonen nachrüstbar. Dieses kann des Weiteren zur adaptiven Kontrolle, zur Prozessüberwachung oder zur Prozesskontrolle, während dem Fräsprozess verwendet werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Dentalfräsmaschine
- 101: Dentalobjekt
- 103: Mikrofon
- 105: Positionsbestimmungseinrichtung
- 107: Fräswerkzeug
- 109: Fräskopf
- 111: Werkstück
- 113: Schallsignal
- 115: Frequenzspektrum
- 117: Spitze/Peak
- 119: Loch

## Patentansprüche

1. Dentalfräsmaschine (100) zum Herstellen eines Dentalobjekts (101), mit:
- einem Mikrofon (103) zum Erfassen von Schallsignalen während eines Fräsvorgangs; und
- einer elektronischen Positionsbestimmungseinrichtung (105) zum Bestimmen einer Position eines Fräswerkzeugs (107) und/oder eines Werkstückes (111) auf Basis der Schallsignale.

2. Dentalfräsmaschine (100) nach Anspruch 1, wobei das Mikrofon (103) in einem Fräskopf (109) der Dentalfräsmaschine (100) angeordnet ist.

3. Dentalfräsmaschine (100) nach einem der vorangehenden Ansprüche, wobei Positionsbestimmungseinrichtung (105) ausgebildet ist, das Schallsignal in die Frequenzdomäne zu transformieren.

4. Dentalfräsmaschine (100) nach einem der vorangehenden Ansprüche, wobei die Dentalfräsmaschine (100) mehrere Mikrofone (103) zum Erfassen von Schallsignalen während eines Fräsvorgangs umfasst.

5. Dentalfräsmaschine (100) nach einem der vorangehenden Ansprüche, wobei das Mikrofon (103) ausgebildet ist, Schallsignale mit einer Frequenz zwischen 5 kHz und 20 kHz zu erfassen.

6. Dentalfräsmaschine (100) nach einem der vorangehenden Ansprüche, wobei die Positionsbestimmungseinrichtung (105) ausgebildet ist, eine Phasenverschiebung zwischen einem ersten und einem zweiten Schallsignal zu bestimmen.

7. Dentalfräsmaschine (100) nach einem der vorangehenden Ansprüche, wobei die Positionsbestimmungseinrichtung (105) ausgebildet ist, einen Berührungskontakt des Fräswerkzeugs (107) an dem Werkstück (111) zu erfassen.

8. Dentalfräsmaschine (100) nach einem der vorangehenden Ansprüche, wobei die Positionsbestimmungseinrichtung (105) ausgebildet ist, eine räumliche Form eines Werkstücks (111) zu erfassen.

9. Dentalfräsmaschine (100) nach einem der vorangehenden Ansprüche, wobei der Fräsvorgang auf Basis der Schallsignale gesteuert wird.

10. Dentalfräsverfahren zum Herstellen eines Dentalobjekts, mit den Schritten:
- Erfassen (S101) von Schallsignalen während eines Fräsvorgangs mit einem Mikrofon (103); und
- Bestimmen (S102) einer Position eines Fräswerkzeugs (107) und/oder eines Werkstückes (111) auf Basis der Schallsignale.

11. Dentalfräsverfahren nach Anspruch 10, wobei das Schallsignal in die Frequenzdomäne transformiert wird.

12. Dentalfräsverfahren nach Anspruch 10 oder 11, wobei Schallsignale mit einer Frequenz zwischen 5 kHz und 20 kHz erfasst werden.

13. Dentalfräsverfahren nach einem der Ansprüche 10 bis 12, wobei eine Phasenverschiebung zwischen einem ersten und einem zweiten Schallsignal bestimmt wird.

14. Dentalfräsverfahren nach einem der Ansprüche 10 bis 13, wobei ein Berührungskontakt des Fräswerkzeugs (107) an dem Werkstück (111) erfasst wird.

15. Dentalfräsverfahren nach einem der Ansprüche 10 bis 14, wobei räumliche Form eines Werkstücks (111) erfasst wird.
